**Europäisches Patentamt**

**European Patent Office**

**Office européen des brevets**

(11) Veröffentlichungsnummer: **0 003 119**
**A1**

## (12) EUROPÄISCHE PATENTANMELDUNG

(21) Anmeldenummer: 79100041.7

(22) Anmeldetag: 08.01.79

(51) Int. Cl.²: **C 02 B 1/20**
**C 02 C 5/02**

(30) Priorität: 11.01.78 DE 2801034

(43) Veröffentlichungstag der Anmeldung:
25.07.79 Patentblatt 79/15

(84) Benannte Vertragsstaaten:
BE CH DE IT NL SE

(71) Anmelder: HOECHST Aktiengesellschaft
WERK KNAPSACK
D-5030 Hürth(DE)

(72) Erfinder: Kandler, Joachim, Dr.
Amselweg 10
D-5042 Erftstadt(DE)

(72) Erfinder: Gleisberg, Dietrich, Dr.
Falkenweg 12
D-5042 Erftstadt(DE)

(72) Erfinder: Hannsjörg, Ulrich, Dr.
von Bodelschwinghweg 47
D-5042 Erftstadt(DE)

(72) Erfinder: Cremer, Joseph, Dr.
Carl-Schurz-Strasse 6
D-5030 Hürth(DE)

(54) Flockungsmittel zum Reinigen von Abwässern und Verfahren zu seiner Herstellung.

(57) Das Flockungsmittel für die Entfernung von im Abwasser gelösten Phosphaten und organischen Verunreinigungen besteht aus einer Mischung von Eisen-III-sulfat und Kalk. Zur besseren Handhabung wird das Flockungsmittel dem Abwasser in Form von Granalien mit einem Durchmesser von 1-3 mm zugesetzt.

EP 0 003 119 A1

0003119

HOECHST AKTIENGESELLSCHAFT     HOE 78/ H 001
                 BEZEICHNUNG GEÄNDERT
                     siehe Titelseite

Flockungsmittel zur Reinigung von Abwässern

Die Erfindung betrifft Flockungsmittel für die Reinigung von Abwässern, insbesondere von kommunalen Abwässern, zur Herabsetzung der organischen Abfallstoffe, die teils kolloid, teils gelöst im Abwasser vorliegen, und Entfernung der gelösten Phosphate.

Zivilisatorische Einflüsse beschleunigen die Eutrophierung vor allem stehender Gewässer. Unter Eutrophierung wird die Nährstoffanreicherung in den Gewässern verstanden, als deren Folge ein starkes Wachstum, besonders der Planktonalgen, auftritt. Nach dem Absterben der Algen sinken diese in tiefere Gewässerschichten ab und werden dabei unter Sauerstoffverbrauch bakteriell zersetzt.

Eine Möglichkeit zur Zurückdrängung der Eutrophierung besteht in der Herabsetzung der Phosphatlast und des CSB-Kennwertes des Abwassers. Zu der Phosphatlast zählen auch kondensierte Phosphate, die hauptsächlich aus Waschmitteln stammen. Die kondensierten Phosphate werden in Abhängigkeit vom pH-Wert und Temperatur des Abwassers, durch Microorganismen katalysiert, in einfache Phosphate hydrolytisch gespalten.

2

Der CSB ist ein Kennwert für Abwasserinhaltsstoffe und gibt den chemischen Sauerstoffbedarf an.

Zur Entfernung der Phosphate und eines Teils der organischen Substanzen aus kommunalen Abwässern sind viele chemische Verfahren vorgeschlagen und auch angewendet worden.Eine Übersicht über Veröffentlichungen zur Phosphatentfernung aus Abwässern mittels Eisen-,Aluminium- oder Calcium-Salzen ist gegeben in der Zeitschrift für angewandte Chemie 88, Heft 11, (1976), Seiten 354-365.

In der DE-OS 2 147 999 wird die Anwendung von $FeCl_3$ oder $Fe_2(SO_4)_3$ für die Ausflockung von Verunreinigungen in Abwässern beschrieben.

Aluminiumsulfat in Verbindung mit einer Vorklärung durch gebrannten oder gelöschten Kalk wird in der DE-OS 1 517 723 vorgeschlagen.

Nach der DE-OS 1 642 399 sollen Phosphate aus dem Abwasser durch eine Kalkdosierung bei einem pH-Wert zwischen 8 und 9 entfernt werden.

In der DE-OS 1 926 969 ist ein Verfahren zur Phosphatentfernung aus Abwässern mit dreiwertigen seltenen Erdmetallen beschrieben.

Eine Kombination eines Gemisches aus Kalziumhydroxid und dem Hydroxid eines dreiwertigen Metalles (Eisen-III-Salze) wird zum Ausfällen von anionaktiven Detergentien bei einem pH-Wert von etwa 10-11 in der Siedehitze beschrieben in der DE-OS 1 517 678. Die Menge des dreiwertigen Metalls soll mindestens etwa ein Zehntel der eingesetzten Menge an Kalziumhydroxid betragen.

Gegenstand der Erfindung sind Flockungsmittel für die Reinigung von Abwässern, die aufgebaut sind aus Eisen-III-sulfat und gelöschtem Kalk und gemeinsam in granulierter Form eine leichte, apparativ einfache Flockungsmitteldosierung erlauben, ohne daß der pH-Wert der gerreinigten Abwässer geändert wird. Die Zugabe der Flockungsmittel kann, da der pH-Wert im Abwasser nicht geändert wird, in der Stufe der biologischen Abwasseraufbereitung vorgenommen werden. Durch die Ausfällung von Gips wird einerseits die Sulfatfracht der Abwässer entlastet, andererseits fällt ein dichter Schlamm mit über 10 g Trockensubstanz/100 g Schlamm an, der in dieser Form gut entwässert und deponiert werden kann.

Flockungsmittel gemäß der Erfindung für die Reinigung von Abwässern, insbesondere von kommunalen Abwässern bestehen aus Eisen-III-sulfat und Kalk und sind granuliert.

Die vorgeschlagenen Flockungsmittel sollen ein Gewichtsverhältnis von Kalk zu Eisen-III-sulfat 1 : 2 bis 10, vorzugsweise 1 : 4 bis 5, haben.

Die Flockungsmittel können als Kalk, sowohl gebrannten als auch gelöschten Kalk, insbesondere aber auch das bei der Kalziumkarbidvergasung anfallende Kalziumhydroxid enthalten.

Die Flockungsmittel werden vorteilhaft als Granalien mit einem Durchmesser von kleiner als 10 mm. vorzugsweise mit einem Durchmesser von 1-3 mm, verwendet.

Es ist zweckmäßig, die Flockungsmittel dadurch herzustellen, daß man Eisen-III-sulfat und Kalk mischt und diese Mischung unter Aufsprühen von Wasser in einer Granuliertrommel oder auf einem Granulierteller granuliert.

Eine Ausgestaltung der Herstellung der Flockungsmittel liegt darin, daß Unter- und Überkorn abgesiebt werden und, nach Aufmahlung des Überkorns, wieder in den Granulierungsprozeß rückgeführt werden.

Die beanspruchten Flockungsmittel sind, da die Flockungsmittelzugabe keine pH-Wert-Änderung im Abwasser bewirkt, in der Vorfällung, Simultanfällung oder Nachfällung verwendbar. Es hat sich weiter überraschend gezeigt, daß weitgehend unabhängig vom pH-Bereich eine gute Flockenbildung stattfindet. Die beanspruchten Flockungsmittel können auch direkt in die biologische Abwasserreinigung gegeben werden. Die benötigte Menge an Flockungsmittel ist abhängig von der Verschmutzung der Abwässer, insbesondere hinsichtlich der Phosphationenkonzentration, des CSB-Wertes, dem pH-Wert des Abwassers und dem gewünschten Reinigungsgrad. Zur Erreichung eines Phosphatendgehaltes von $<1$ mg P/l und eines CSB-Wertes von 70 mg $O_2$/l genügt eine Dosierung von 250 g Flockungsmittel/$m^3$ Abwasser bei einer P-Einlaufkonzentration von 20 mg P/l und einem CSB-Wert von 350 mg $O_2$/l, bei einem pH-Wert zwischen 6,5 - 7,5.

Herstellungsbeispiel

$FeSO_4$ . 7 $H_2O$ wird in einem vorgezogenen Schritt zu $FeSO_4$ . $H_2O$ entwässert. (Dieses Produkt ist als Handelsware zugänglich). $FeSO_4$ . $H_2O$ wird nach DE-OS 2 446 544 im Drehrohr bei 500°C unter Luftzutritt aufoxidiert zu einem Gemisch aus $Fe_2(SO_4)_3$ und $\alpha$-$Fe_2O_3$. Der unlösliche Anteil an $Fe_2O_3$ wird mit überschüssiger $H_2SO_4$ (ca. 10 %-Überschuß) zu $Fe_2(SO_4)_3$ aufgeschlossen. Das dabei anfallende $Fe_2(SO_4)_3$ enthielt 2,95 % freie Schwefelsäure und ein $SO_4^{2-}$ : $Fe^{3+}$ -Verhältnis von 1,6. Dieses Produkt wurde im Paddelwellenmischer mit Kalkhydrat aus der Kalziumkarbidvergasung gemischt. Das Kalkhydrat enthielt ca.71% CaO. Das Mischungsverhältnis von $Fe_2(SO_4)_3$:$Ca(OH)_2$ wurde auf 4,0:1 eingestellt. Durch Aufsprühen von 135 g $H_2O$ je kg $Fe_2(SO_4)_3$ -Ca$(OH)_2$-Gemisch wurde eine Granulierung erreicht. Die Fraktion von 1-3 mm wurde ausgesiebt. Eine Lösung des Gemisches zeigte in der gelösten Phase ein $SO_4^{2-}$: Fe-Verhältnis von 1,42.

Anwendungsbeispiel

Die nach dem Herstellungsbeispiel erhaltenen granulierten Flockungsmittel wurden der biologischen Stufe einer halbtechnischen Kläranlage, und zwar 440 g/h Flockungsmittel pro 2 $m^3$/h Abwasser, zudosiert. Das zu reinigende Abwasser hatte einen CSB-Kennwert von 320 mg $O_2$/l, 18 mg P/l und einen pH-Wert von 7,3.. Nach einer Verweilzeit von 2 Stunden im Flockungsbecken und einer anschließenden Sedimentationszeit von 1,5 Stunden wurde das gereinigte Abwasser analysiert: Im gereinigten Abwasser wurde ein CSB-Kennwert von 62 mg $O_2$/l, 0,6 mg P/l und ein pH-Wert von 7,3 bestimmt. Die gebildete Flocke hatte eine Größe zwischen 2 und 3 mm.

Die Absetzgeschwindigkeit der Fällungsflocken im Becherglas wurde ermittelt mit 6 Minuten. Der abgezogene Schlamm hatte einen Trockensubstanzgehalt von 12,0 %. Der anorganische Anteil des Schlammes betrug 35 %, bezogen auf den trockenen Schlamm.

Vergleichsbeispiel

Das Anwendungsbeispiel wurde wiederholt ohne Zusatz von Flockungsmitteln. Der abgezogene Schlamm hatte einen Trockensubstanzgehalt von 3,3 %. Im gereinigten Abwasser wurde ein CSB-Kennwert von 98 mg $O_2$/l, 15 mg P/l und ein pH-Wert von 7,5 bestimmt.

HOECHST AKTIENGESELLSCHAFT                    HOE 78/H 001

Flockungsmittel zur Reinigung von Abwässern

BEZEICHNUNG GEÄNDERT
siehe Titelseite

Patentansprüche

1. Flockungsmittel für die Reinigung von Abwässern, insbesondere von kommunalen Abwässern, <u>dadurch gekennzeichnet,</u> daß

   a) die Flockungsmittel bestehen aus Eisen-III-sulfat und Kalk und

   b) die Flockungsmittel granuliert sind.

2. Flockungsmittel nach Anspruch 1, <u>dadurch gekennzeichnet,</u> daß das Gewichtsverhältnis von Kalk zu Eisen-III-sulfat 1 : 2 bis 10, vorzugsweise 1 : 4 bis 5, beträgt.

3. Flockungsmittel nach Anspruch 1 oder 2, <u>dadurch gekennzeichnet</u>, daß als Kalk gebrannter oder gelöschter Kalk verwendet wird.

4. Flockungsmittel nach Anspruch 1 oder 2, <u>dadurch gekennzeichnet</u>, daß das bei der Kalziumkarbidvergasung anfallende Kalziumhydroxid verwendet wird.

5. Flockungsmittel nach Anspruch 1, dadurch gekennzeichnet, daß die Granalien einen Durchmesser von kleiner als 10 mm haben.

6. Flockungsmittel nach Anspruch 5, dadurch gekennzeichnet, daß die Granalien einen Durchmesser von 1-3 mm haben.

7. Verfahren zur Herstellung von Flockungsmitteln nach Anspruch 1, dadurch gekennzeichnet, daß Eisen-III-sulfat und Kalk gemischt werden und diese Mischung unter Aufsprühen von 50 bis 350 ml Wasser/kg Mischung, vorzugsweise 100 bis 150 ml Wasser/kg Mischung, in einer Granuliertrommel auf einen Granulierteller oder in einer anderen geeigneten Apparatur granuliert wird.

8. Verfahren nach einem der vorangehenden Ansprüche, dadurch gekennzeichnet, daß Unter- und Überkorn abgesiebt werden und, nach Aufmahlung des Überkorns, wieder in den Granulierprozeß rückgeführt werden.

0003119
Nummer der Anmeldung

# EUROPÄISCHER RECHERCHENBERICHT

EP 79 10 0041

| | EINSCHLÄGIGE DOKUMENTE | | | KLASSIFIKATION DER ANMELDUNG (Int.Cl.²) |
|---|---|---|---|---|
| Kategorie | Kennzeichnung des Dokuments mit Angabe, soweit erforderlich, der maßgeblichen Teile | | betrifft Anspruch | |
| | <u>DE - C - 880 877</u> (FARBWERKE HOECHST) <br> * Seite 1, Zeile 1 - Seite 2, Zeile 39 * <br><br> -- <br><br> | | 1-3,7 | C 02 B 1/20 <br> C 02 C 5/02 |
| A | <u>FR - A - 2 129 035</u> (SOCIETE NOUVELLE) | | | |
| A | <u>DE - A - 2 527 987</u> (R.F. PIEPHO) <br><br> ---- | | | |

**RECHERCHIERTE SACHGEBIETE (Int. Cl.²)**

C 02 B 1/20
C 02 C 5/02

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-03-1979 | TEPLY |

EPA form 1503.1  06.78